Europäisches Patentamt

**European Patent Office**

**Office européen des brevets**

(11) Publication number: **0 165 351**

A1

# EUROPEAN PATENT APPLICATION

(21) Application number: **84305041.0**

(22) Date of filing: **25.07.84**

(51) Int. Cl.⁴: **H 02 H 9/00**
**H 05 B 6/66**

(30) Priority: **11.05.84 US 609171**

(43) Date of publication of application:
**27.12.85 Bulletin 85/52**

(84) Designated Contracting States:
**DE FR GB IT**

(71) Applicant: **EATON CORPORATION**
**100 Erieview Plaza**
**Cleveland Ohio 44114(US)**

(72) Inventor: **Livernash, Robert Anton**
**899 West Benton Avenue**
**Naperville Illinois 60540(US)**

(72) Inventor: **Waltasti, Stephen Albert**
**445 North Ashbury**
**Bolingbrook Illinois 60439(US)**

(74) Representative: **Douglas, John Andrew**
**Eaton House Staines Road**
**Hounslow Middlesex TW4 5DX(GB)**

(54) In-rush protected multi-cycle control.

(57) An appliance control system employs a selector switch (14) for selecting from a plurality of circuits operable for varying the duty cycle of the appliance electrical load function (16). Protection against damaging effects of in-rush current transients during duty-cycling is provided by series connecting a resistor (78) in the line just before duty-cycle switch closure occurs, shunting the resistor current and then mechanically switching the resistor out of the circuit during the "ON" portion of the duty-cycle. During selected duty-cycling in which the null or dwell comprises the major portion of they duty-cycle, the switching out prevents full line current from overheating the resistor.

./...

*Fig. 1*

# CURRENT IN-RUSH PROTECTED MULTI-CYCLE CONTROL

## BACKGROUND OF THE INVENTION

The present invention relates to electrical controllers of the type utilized in appliances having a variety of operator selected modes for the appliance program duty-cycle. Appliances of this type often employ a program controller which has a timing mechanism for controlling the interval of operation of the appliance program which is preset by the operator at the beginning of the program. In such appliances the operator may select a desired program interval by actuating a time selection control input and may also select between a plurality of individual modes of duty-cycle operation to be performed during the selected program interval.

In electrical appliances having a timing mechanism for cycling the appliance power load function, a widely used technique is to provide a rotating cam for actuating and deactuating electrical switching mechanisms for making and breaking a circuit between an electrical power supply and the appliance function generator. Where the appliance function generator or load device consumes substantial power at the supply line voltage, and when the load is inductive, the switching mechanism is subjected to high transient in-rush currents upon closing of the power circuit.

In one such application of a multi-cycle controller for an appliance, a programmer/timer is employed for duty-cycle switching of the magnetron in a microwave cooking oven. The repetitive transient in-rush current for cyclical energization of the magnetron circuit causes rapid deterioration of the electrical switching contacts and high power line current draw which then causes tripping of circuit breakers or fuse blow-out. The rapid contact deterioration results in reduced service life of the programmer/timer.

Heretofore, attempts have been made to provide energy absorbing means in parallel with the appliance load current switching mechanism to absorb a portion of the energy contained in the transient in-rush current. It is known to connect an energy absorbing or current limiting resistor in parallel with the load current switching mechanism such that during a portion of the program interval the resistor is held in the circuit and draws current. In this known technique, the resistor is not switched out of its circuit until the time the program of the appliance load function is terminated.

The disadvantage of the foregoing known technique of providing protection for a switching mechanism from transient in-rush current is that the resistor must have a low enough value to draw sufficient current to protect against high in-rush transients. Therefore, during the remainder of the program interval, the resistor depends upon the load device to draw sufficient current when brought on-line to prevent the resistor from overheating while remaining in-circuit. The aforesaid known resistor technique for protecting a switching mechanism from transient in-rush current has thus been found satisfactory only for appliances employing a single load current switching circuit during the entire program interval for the appliance load.

Where it has been desired to provide an appliance having a plurality of selectable power levels or duty-cycle options for the appliance program, the appliance load device is cycled for fractional portions of the program interval to provide reduced average power levels over the selected program interval. If a shunt resistor remains in-circuit during a mode of operation where the load duty-cycle comprises only a minor fraction, such as 25% of the total function program interval, the shunt resistor draws high current for 75% of the program interval after the appliance load function is terminated and is then subjected to overheating and burnout.

Thus, it has long been desired to find an economical and simple way of providing transient in-rush current protection for an appliance programmer/timer in applications where a variety of fractional program interval duty-cycle options are provided for the selected program interval.

## Summary of the Invention

The present invention provides a unique electrical programmer controller for timed interval operation of an appliance in a variety of operator selected modes of operation during the selected program interval. The present invention is particularly applicable to programmer controllers employed in actuating the magnetron utilized in a microwave oven for cooking comestibles. The programmer controller of the present invention has a plurality of switching contacts actuated and deactuated by timed rotation of a cam for making and breaking a power circuit to the magnetron for all or selected fractional duty-cycle operation during the program interval. The fractional duty-cycle operation of the magnetron is operator selected by prepositioning a mode selector switch which selects the appropriate electrical circuit from a plurality of circuits for controlling power to the magnetron upon energization of the timing mechanism for rotating the switch-actuating program cam.

A current limiting resistor is connected to the common terminal of the mode selector switch. A separate set of contacts actuated by the program cam is provided for completing a circuit through the resistor prior to actuation of a set of contacts for completion of the power circuit to the magnetron. The resistor thus shunts and absorbs current for a short duration of time prior to switching on of the magnetron. The program cam is operable to break the circuit to the resistor within a second or less after the magnetron is switched "ON", in order to prevent overheating of the resistor in selected modes of operation in which the duty-cycle of the magnetron is substantially less than the program interval.

The present invention thus provides a simple, unique and low cost way of providing transient in-rush current protection for an appliance power device which is selectively operable in modes having duty-cycle options comprising a fraction of the program interval.

Brief Description of the Drawings

Figure 1 is a schematic of the program control system of the present invention illustrating the electromechanical programmer controller;

Figure 2 is a simplified schematic of the control circuit of the system of Figure 1, with the selector switch set in the "LO" mode and with the shunt resistor switch in-circuit;

Figure 3 is the circuit of Figure 2 with the magnetron load switched in-circuit;

Figure 4 is the circuit of Figure 2 with the shunt resistor circuit broken and the magnetron load still in circuit;

Figure 5 is the circuit of Figure 2 with the power to the magnetron switched "OFF";

Figure 6 is a schematic similar to Figure 2 with the selector switch set in the "MED-LO" mode and the magnetron switched in-circuit with the shunt resistor switched out of circuit;

Figure 7 is a schematic similar to Figure 2 with the selector switch set in the "MED" mode and with the magnetron switched in-circuit and the shunt resistor switched out of the circuit;

Figure 8 is a schematic similar to Figure 2 having the selector switch set in the "MED-HI" mode and with the shunt resistor switched out of the circuit and the magnetron switched in-circuit;

Figure 9 is a perspective of the program cam of the controller of Figure 1; and,

Figure 10 is a timing diagram of the operations illustrated in Figures 1-8.

## Detailed Description

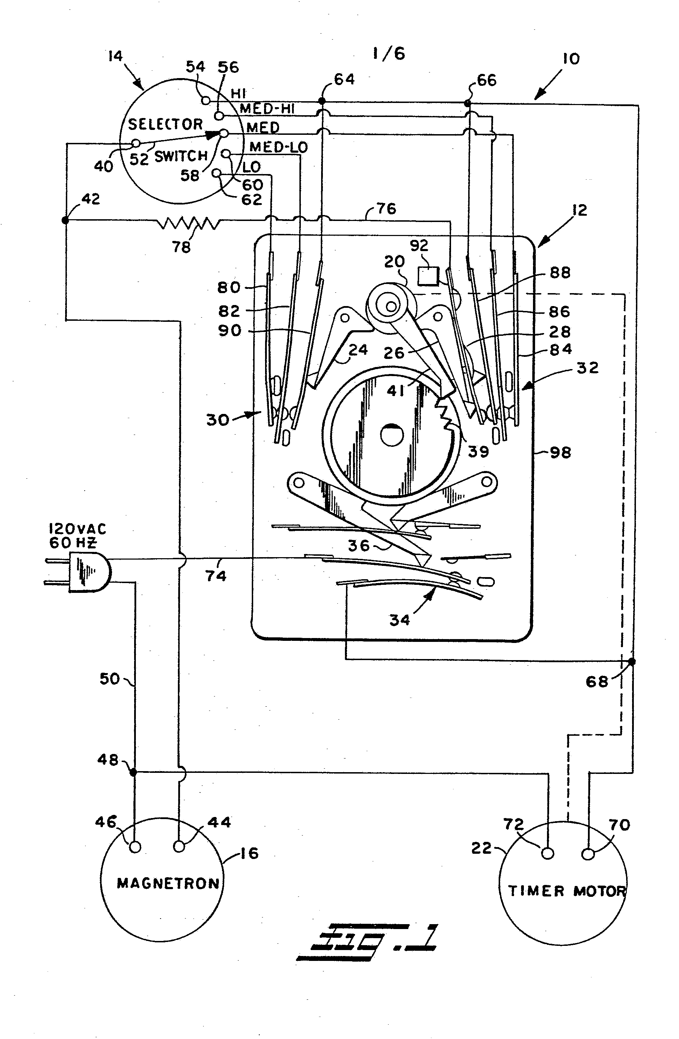

Referring now to Figure 1, the control system of the present invention indicated generally at 10 includes a programmer/timer indicated generally at 12, a mode selector switch indicated generally at 14 and an electrical appliance load illustrated as the magnetron 16. The programmer/timer 12 includes a rotating cam drum 20 driven by a timer motor 22, connected by dashed line in Fig. 1 and a plurality of cam followers 24, 26 and 28. The cam followers actuate respectively, two groups of switch contacts indicated generally at 30, 32.

An arming, or line switch operates in conjunction with a group of electrical contacts indicated generally at 34 which are actuated by cam follower 36, which is driven by a separate cam drum 38 operated by an advancing pawl 41 which is oscillated by an eccentric cam driven by the timing motor 22 and contacts a toothed ratchet wheel 39 for advancing the cam 38 in a step-by-step manner.

The selector switch 14, has a common terminal 40 which is connected through a lead to junction 42, which is connected through a lead to one terminal 44 of the magnetron 16. The remaining terminal 46 of the magnetron is connected through a lead to junction 48, which is connected through a lead 50 to one side of a power supply line.

Switch 14 has a plurality, and preferably five, switching terminals which may be selectably connected to terminal 40 by positioning a switch arm 52 in the desired position to make with any one of the five chosen terminals 54-62. The selector switch is shown in the position connecting to terminal 58 in Figure 1 for "MED" power level setting.

Switch terminals 56 through 62 are each respectively connected to one of the arms of the switch stacks 30, 32; and, terminal 54 is connected through junctions 64 and 66 to one arm of each of the switch stacks 30, 32. A lead from junction 66 to junction 68 connects to one terminal 70 of the timing motor 22. The remaining terminal 72 of the timing motor is connected via a lead to junction 48 and through lead 50 to one side of the power line. Junction 68 is also connected through switch 34 and through lead 74 to the opposite side of the power supply line.

One arm of switch stack 32 is connected via lead 76 to an energy absorbing resistor 78 which has the opposite side thereof connected via a lead to junction 42. It will be apparent from Figure 1, that the energy absorbing shunt resistor 78 is connected in parallel, via switch stack 32, with the power selector switch 14 and in series with the magnetron 16.

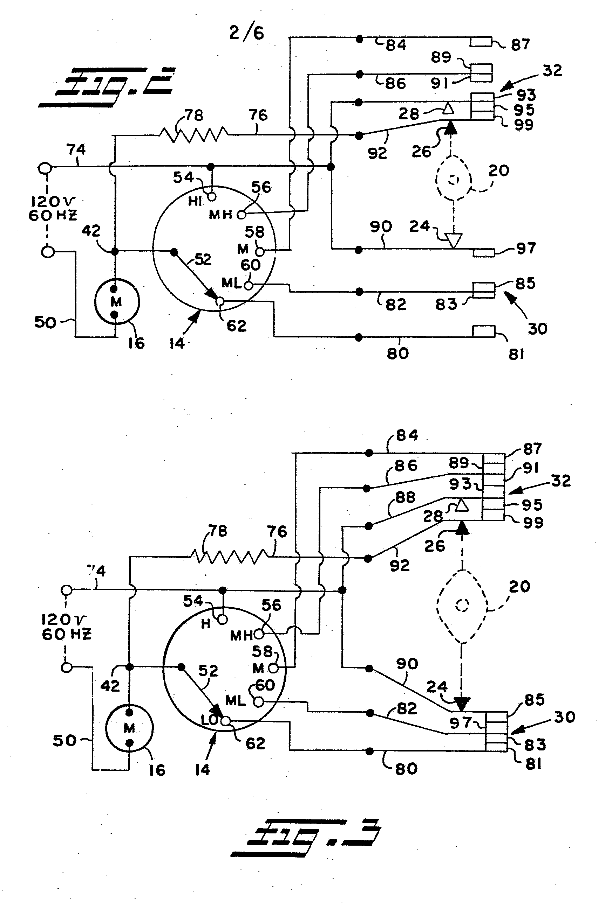

Referring now to Figures 2-5, the power selector mode switch 14 and the contact stacks 32, 30 are shown in greater detail in simplified schematic arrangement for ease of description with respect to the actuation and deactuation of the various contacts within the stacks 32, 30 in response to rotation of the cam 20. The timer motor has been omitted from the schematics of Figs. 2-5.

Referring to Figures 2-5 in particular, the terminal 62 of the selector switch 14 represents the "LO" or minimum duty-cycle setting of switch 14 and is connected via a lead to switch contact arm 80 which has a contact 81 thereon. The selector switch 14 is shown in Figures 2-5 as positioned in the "LO" power level setting with the moveable arm 52 thereof contacting switch terminal 62. The selector switch terminal 60, representing the "MED-LO" power level setting is connected via a lead to contact arm 82 which has a pair of contacts 83, 85 mounted respectively on opposite sides of the arm 82.

The selector switch terminal 58, representing the "MED" power level setting is connected via a lead to the upper contact arm 84 of the stack 32 and has a contact 87 mounted thereon. The selector switch terminal 56 representing the "MED-HI" power level setting, is connected via a lead to contact arm 86 in the stack 32 and has contacts 89, 91 mounted respectively on opposite sides thereof.

The contact terminal 54 of switch 14 which represents full power or 100% duty-cycle operation is connected to one side of the power line and via junctions and lead 74 and to contact arm 88 in stack 32 and to contact arm 90 in stack 30. The arm 88 has a pair of contacts 93, 95 mounted respectively on opposite sides thereof. The contact arm 90 in stack 30 has a single contact 97 mounted on one side thereof adjacent the contact 85.

The resistor lead 76 is connected to the contact arm 92 has a single contact 99 mounted on the end thereof for contacting adjacent contact 95 of the contact arm 88 connected to one side of the power line. Contact arm 92 is positioned to be contacted by cam follower 26.

Referring now to Figure 9, the rotary cam 20 is operably connected to timer motor 22 by a suitable gear reduction train (not shown) the final drive gear is shown in dashed outline in Figure 9 as having peripheral teeth 94. The cam 20 rotates about shaft 96 which is journaled for rotation in the housing 98 (see Fig. 1) in any suitable manner for permitting rotation thereon.

The cam 20 in the present practice is driven by motor 22 to rotate in a clockwise direction, as viewed in Figure 9. Cam 20 is contacted by cam follower 26 on the step-ramp 100 for effecting movement of contact arm 92 and closure of the contact set 95, 99 for applying power to the resistor 78 which condition is shown schematically in Figure 2 wherein the cam 20 is shown in dashed outline; and, the tip of the cam follower 26 is shown in solid black having deflected the arm 92 upwardly. Current flows from the power line through lead 74, contact arm 88, closed contact pair 95 and 99, contact arm 92, lead 76, through resistor 78, to magnetron 16 and completes circuit to the opposite side of the power line through lead 50.

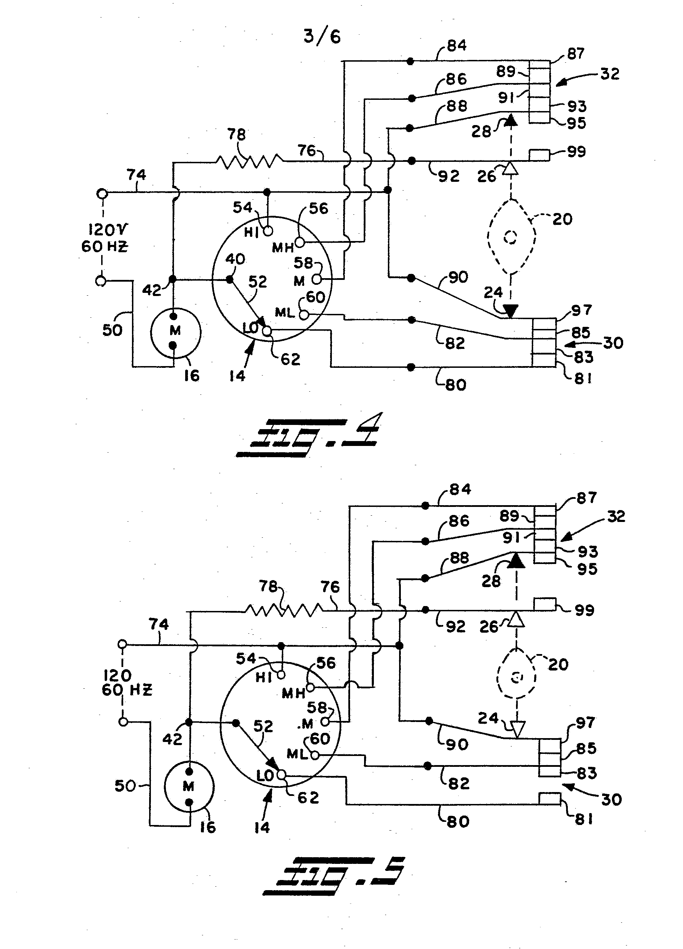

As the cam 20 rotates further, the ramp-step surface 102 on the cam causes cam followers 26, 28 to move further in an upward direction to the position shown in Figure 3, wherein all of the contacts in the stack 32 are in a closed condition. The cam follower 24 is caused to move to a downwardly extreme position as shown in Figure 3 to cause all of the contacts in the stack 30 to move to a closed position as shown in Figure 3. The schematic representation of Figure 3 represents the operational condition wherein current flow ceases through the resistor 78 due to closing of contact stack 30. In Fig. 3, current flows from the power line through lead 74, through contact arm 90 and the closed contact stack 30, through contact arm 80, through the mode selector switch terminal 62, through arm 52, through common terminal 40 and through the magnetron 16 and completes the circuit to the opposite side of the power line through lead 50. In the condition illustrated in the schematic of Figure 3, the magnetron is energized for the "LO" power level duty-cycle and the resistor 78 has been shunted.

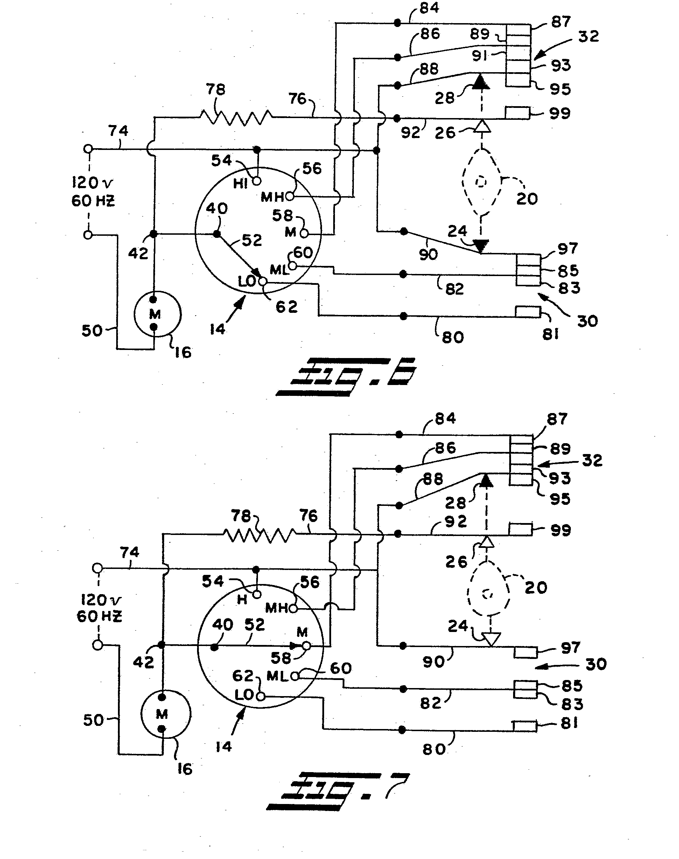

As the cam 20 continues further rotation, the programmer/timer assumes an operational condition as shown schematically in Figure 4 wherein cam follower 28 is held upwardly lifted to the position shown in the solid black triangle in Figure 4 in which position the contacts 87, 89, 91, 93 are in closed condition by virtue of the upward movement of contact arm 88. In the condition shown in Figure 4, cam follower 26 has dropped to permit arm 92 for the resistor circuit to open contact set 95, 99 and break the circuit to the resistor 78. This is accomplished by the step-ramp surface 104 on the cam which is opposite surface 102 on the highlift lobe of the cam (see Fig. 9).

In the operational condition of the programmer/timer shown in Figure 4, the resistor 78 is isolated from the circuit and current flow is otherwise identical to that of Figure 3, for maintaining the magnetron energization during the "LO" mode duty-cycle.

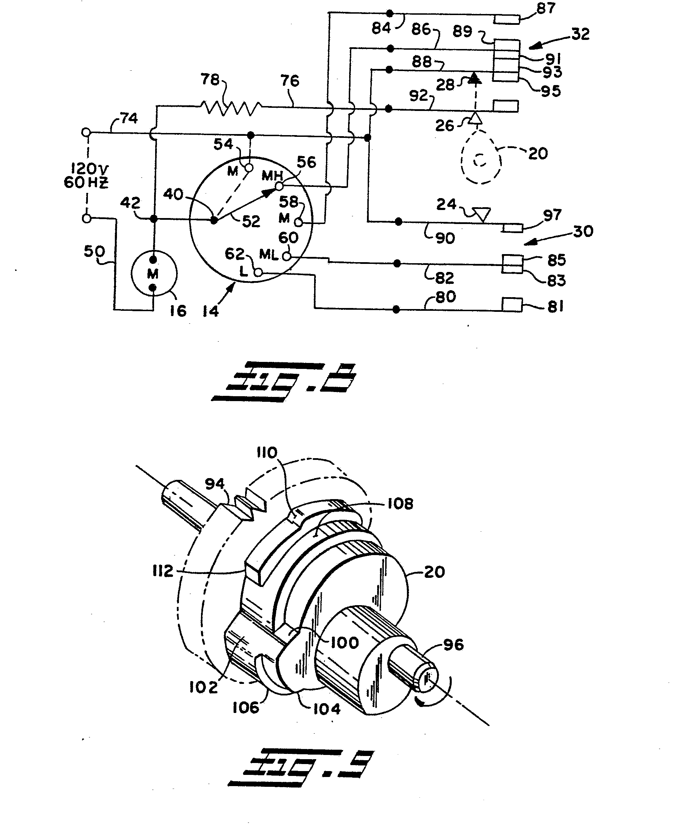

Continued rotation of the cam 20, through the "LO" mode of operation causes the programmer/timer to assume the condition shown schematically in Figure 5, wherein current flow to the magnetron has been terminated for ending the "LO" mode duty-cycle. The condition shown in Figure 5, is effected by cam follower 24 dropping from the high lobe of the cam onto the ramp indicated by number 106 (see Figure 9) wherein the contact stack 30 has the circuit broken between contacts 83, 81 for cutting off power to the magnetron by movement of arms 82, 90.

The conditions illustrated in Figures 2-5 represent the complete operating sequence of the programmer/timer with the mode selector switch 14 in the position making contact between the arm 52 and terminal 62 for a "LO" power level mode of duty-cycle operation of the magnetron.

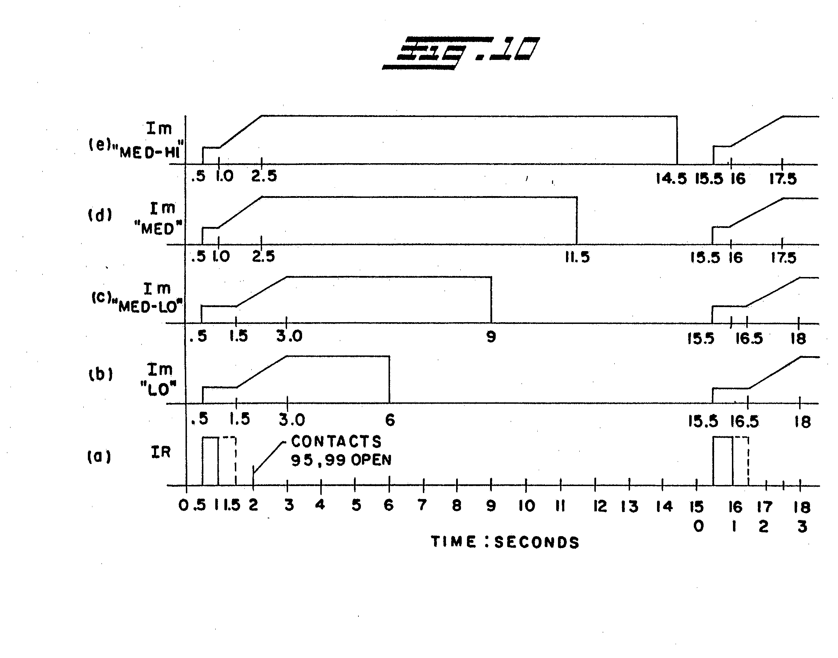

If the appliance operator desires to select a "MED-LO" or medium low power level setting for the magnetron duty-cycle, the mode selector switch is placed in the position wherein the contact arm 52 makes contact with the switch terminal 60 as illustrated in Figure 6. Figure 6 schematically represents the condition of the programmer/timer with the cam 20 rotated to a position in which the magnetron 16 is energized during the portion of the duty-cycle after drop-out of resistor 78 and termination of "LO" duty-cycle power level, but before termination of "MED-LOW" power level duty-cycle of the magnetron.  In Fig. 6 with selector switch 14 set for "MED-LO" power level, current flows from the power line through lead 74, contact arm 90, through contacts 97, 85, contact arm 82, switch terminal 60, switch wiper arm 52, junctions 40,  42 and through the magnetron 16 and lead 50 to the opposite side of the power line. Power to the magnetron in the "MED-LO" mode of operation is terminated by cam follower 24 dropping to the level on the cam track indicated at 108 (in Fig. 9) to provide separation of the contact 97, 85.

Referring now to Figure 7, the operation of the programmer/timer is illustrated with the mode selector switch set for making contact between the wiper arm 52 and contact terminal 58 for selection of the "MED" or medium power level mode of operation.  Figure 7 schematically represents the condition of the programmer/timer with the cam 20 rotated to a position in which the magnetron 16 is energized during the portion of the duty-cycle after drop-out of resistor 78 and termination of "LO" and "MED-LO" power level duty-cycles but before termination of the "MED" power level duty-cycle of the magnetron.  In operation, with the selector switch 14 set for "MED" power level, current flows from power line lead 74 through contact arm 88 and the contact stack 32 through contacts 93, 91, 89, 87 and through contact arm 84, through a lead to switch terminal 58, through the switch arm 52 and junction 42, through the magnetron 16 and lead 50 to the opposite side of the power line thereby energizing the magnetron. For magnetron energization in the "MED" power level setting as shown in Figure 7, the magnetron remains energized until cam follower 28 is lowered on the ramp 110 of cam 20 (see Fig. 9) to cause the contact arm 88 and 86 to move to a position breaking the circuit between contacts 87 and 89 thereby cutting off power to terminal 58 of the selector switch.

Referring now to Figure 8, the operation of the control system of the present invention will be described with the mode selector switch 14 having its wiper arm 52 positioned to make contact with terminal 56 thereof for providing a "MED-HI" duty-cycle operation of the magnetron. The programmer/timer 12 is illustrated in Figure 8 as having the cam 20 rotated to a position in which the magnetron 16 is energized during the portion of the duty-cycle after drop-out of resistor 78 and termination of "LO", "MED-LO" and "MED" power level duty-cycles, but before termination of the "MED-HI" power level duty-cycle of the magnetron.

In Fig. 8, with the selector switch 14 set for "MED-HI" power level current flows from power line lead 74 through contact arm 88, contacts 93, 91 and contact arm 86, through a lead to switch terminal 56, and the switch arm 52, and junctions 40 and 42 through the magnetron 16 and to the opposite side of the power line through lead 50 thus completing a circuit through the magnetron. With the mode selector switch 14 set as shown in Figure 8 to contact terminal 56, the power to the magnetron is not disconnected until cam follower 28 drops on the ramp 112 of the cam (see Fig. 9) to cause contact arm 88 to drop such that the circuit is broken between contacts 91 and 93 thereby cutting off current to the magnetron.

It will be understood that for full time operation of the magnetron, corresponding to a 100% duty-cycle, the mode selector switch 14 is positioned such that contact arm 52 makes contact with terminal 54, shown in dashed line in Fig. 8, thereby bypassing the contact stacks 32, 30 and permitting power to flow directly from lead 74 through switch terminal 54, contact arm 52 and junction 42 to the magnetron.

Referring now to Figure 10, the preferred practice of the invention is described with respect to timing diagrams for the programmer/timer switching functions for the resistor 78 and the magnetron plate current for the various selectable power level duty-cycles for the magnetron. The timing diagrams of Figure 10(a)-10(e) are based upon the timing motor being geared such that the cam 20 makes one complete revolution in a period of 15 seconds which has been found satisfactory for operation of the programmer/timer in an application for energizing the magnetron of a microwave cooking oven. It will be understood, however, by those skilled in the art that other periods of rotation for the cam may be chosen as required for the particular needs of the appliance to be operated. For simplicity and ease of illustration, the timing diagrams of Figs. 10(b)-10(e) are plots of the internal magnetron plate current $I_m$ as a function of elapsed time in seconds. It will be understood that the magnetron plate current flow is a function of the filament heating rate in the magnetron and does not reflect the transients which occur in the line current to the magnetron.

Figure 10(a) is a plot of current flow $I_R$ in the resistor 78 and shows the timing of the energization of the energy absorbing or current limiting resistor 78 wherein contacts 99 and 95 are closed after a .5 second elapsed time from start up of the timing motor to begin current flow through the resistor to the magnetron. They remain closed for approximately 1.5 seconds until an elapsed time of 2.0 seconds, whereupon contacts 95, 99 are broken as shown in the condition schematic illustrated in Figure 4. It will be understood that the timing of the current limiting resistor 78 remains fixed and is not effected by the changes in position of the power level switch although current flow through the resistor terminates after closure of the contact set associated respectively with the selected power level.

Referring now to Figure 10(b) at an elapsed time of 1.5 seconds, program cam 20 causes cam follower 24 to close the contact stack 30 for build-up of current flow to the magnetron 16 as shown in Figure 10(b). At this time, current flow through resistor 78 ceases. The initially low plate current flow $I_m$ in the magnetron increases at a rate dependent upon the impedance of the load and heating of the filament; and, for a microwave cooking oven magnetron $I_m$ reaches a maximum after about 1.5 seconds or at the elapsed time of 3.0 seconds. It will be understood that although the current flow through the resistor has been shunted, the resistor is mechanically dropped out by opening of the contacts 95, 99 during this current rise at an elapsed time of 2.0 seconds as noted in Figure 10(a).

Referring again to Figure 10(b), the magnetron in the "LO" power level setting remains energized until an elapsed time of approximately 6 seconds whereupon cam follower 24 breaks the contact between contacts 83, 81, as shown in Figure 5, and terminates current flow to the magnetron. In the present practice of the invention, the "LO" power level duty-cycle is chosen so as to give the magnetron approximately a 20% duty-cycle energization time for the complete rotational period of the cam.

Referring now to Figure 10(c), the timing of the magnetron energization for the "MED-LO" power level setting of the switch 14 is shown wherein the cam follower 24 is moved to cause contact arm 90 to close contacts 97, 85 for completing a circuit through selector terminal 60 at an elapsed time of 1.5 seconds for build-up of current flow in the magnetron. Current flow through resistor 78 ceases at this time. It will be apparent from Figure 10(c) that the plate current $I_m$ builds up in the magnetron to a maximum value as the filament heats which typically occurs at an elapsed time of approximately 3 seconds; and, that although resistor current has been shunted, the resistor 78 is mechanically dropped out of the circuit by opening of the contacts 95, 99 during this current rise at an elapsed time of 2.0 seconds.

With reference again to Figure 10(c), the "MED-LO" power level duty-cycle is approximately 40% of the cam rotation period and is terminated in the present practice upon an elapsed time of 9 seconds. The "MED-LO" duty-cycle is terminated by cam 20 causing cam follower 24 to move contact arm 90 to break the circuit between contacts 97, 85 as described hereinabove.

Referring to Figure 10(d), the timing of the magnetron energization for a "MED" power level setting is shown wherein the magnetron plate current $I_m$ build up begins at an elapsed time of 1.0 seconds reaches a maximum, and is terminated after an elapsed time of 11.5 seconds. The "MED" power level duty-cycle is accomplished by cam follower 28 closing contact 87, 89 as shown in Figure 7, to by-pass resistor 78 and complete the circuit to the magnetron through contact arms 84, 88 and selector switch terminal 58. The contacts 87, 89 91, 93 are closed at an elapsed time of 1.0 seconds; and, the plate current $I_m$ buildup begins in the magnetron and reaches a maximum after an elapsed time of approximatly 2.5 seconds, during which time resistor 78 is mechanically dropped out of the circuit at an elapsed time of 2.0 seconds by opening of the contacts 95, 99. A "MED" power level duty-cycle comprises in the presently preferred practice, approximatly 60% of the period of rotation of the cam 20; and, is terminated by breaking the circuit between contacts 87, 89.

Referring now to Figure 10(e), a timing diagram is shown for the operation of the appliance in the "MED-HI" power level setting for the selector switch 14. The magnetron is energized as shown in Figure 10(e) by closing contacts 91, 93 at an elapsed time of 1.0 seconds to by-pass resistor 78 and build-up magnetron plate current flow through selector switch terminal 56. The plate current in the magnetron builds up to a maximum after a total elapsed time of 2.5 seconds; and, the circuit remains closed until a total elapsed time of 14.5 seconds, whereupon the circuit is broken between the contacts 91, 93 to terminate the "MED-HI" duty-cycle. Although the current in the resistor 78 has been shunted by closure of the contacts 91, 93, the resistor 78 is mechanically dropped out of the circuit by opening of the contacts 95, 99 during the rise of the magnetron current $I_m$ at an elapsed time of 2.0 seconds for the magnetron duty-cycle illustrated in Figure 10(e).

Referring again to Figure 10(a), the resistor current $I_R$ is plotted in solid black line for the power level selector positioning associated with Figures 10(d) and 10(e) and shown in dashed line for the power level selector positions associated with Figures 10(b) and 10(c).

As shown in Figure 10(a) through 10(e), the period of rotation of the cam 20 commences again at elapsed time 15 seconds; and, the duty-cycle timing diagrams are thereafter repeated.

The present invention thus provides a unique and novel way of providing a plurality of power level settings for fractional duty cycling an appliance such as the magnetron in a microwave cooking oven employing a single timer motor driven programmer. The invention further provides for transient in-rush current protection by timed shunting of a current limiting resistor during the initial closing of the power switch to the magnetron. The present invention prevents overheating of the shunting resistor by the timed dropout of the resistor a short time after the build-up of load current.

Although the invention has been described hereinabove with respect to the presently preferred practice, it will be understood by those having ordinary skill in the art that the invention is capable of modifications and variations. The invention is therefore limited only by the following claims.

IN THE CLAIMS:

Claim 1. A current in-rush protection system for an operator selective multi-cycle controller for providing duty-cycle energization to an electrical appliance comprising:

(a) an electrical appliance (16);

(b) mode switch means (14) having a plurality of control positions and operative upon operator selection to make a circuit connection between one of a plurality of individual mode terminals (64-62) and a common terminal (40) electrically series connected with said appliance;

(c) duty-cycle switch means (30, 32 operative upon actuation and deactuation to complete and break a circuit from a source of power through said selected mode terminal, said common terminal and said appliance;

(d) current limiting means (78) connected electrically in parallel with said common switch terminal and said duty-cycle switch means;

(e) timing means (20, 22) operative to actuate and deactuate said duty-cycle switch means in a program sequence for,

(i) cycling power to said appliance for a selected duty-cycle,

(ii) making and breaking the circuit through said current limiting means in a timed sequence with the duty-cycling of said appliance for providing in-rush protection of said switching means against the initial energization current for said appliance, wherein said energy absorbing means circuit is completed before the closing of said appliance circuit, and said energy absorbing means circuit is broken during said appliance duty-cycle.

Claim 2. The in-rush protection system defined in claim 1, wherein said timing means is operative to complete the circuit through said energy absorbing means 0.5 to 1.0 seconds before beginning said power duty-cycle for said appliance.

Claim 3. The in-rush protection system defined in claim 1, wherein said timing means is operative to break the circuit through said energy absorbing means 0.5-1.0 seconds after beginning said appliance duty-cycle.

Claim 4. The in-rush protection system defined in claim 1, wherein said current limiting comprises a resistor.

Claim 5. The in-rush protection system defined in claim 1, wherein,

(a) said mode switch means comprises a five-position switch;

(b) said duty-cycle switch means comprises a first pair of switch contacts (95, 99) operative upon actuation and deactuation to make and break said energy absorber circuit and a second pair of switch contacts (85, 97) each pair operative upon actuation and deactuation to make and break one of said mode terminal circuits; and,

(c) said timing means includes a pair of cam surfaces operative to actuate said first and second pairs of switches.

Claim 6. A method of protecting an appliance controller from load current in-rush comprising the steps of:

(a)  selecting one of a plurality of switching circuits for timed actuation and deactuation of an appliance duty-cycle switch;

(b)  initially energizing the appliance through a current limiting path;

(c)  closing said duty-cycle switch for completing said selected switching circuit to said appliance for duty-cycling and shunting said current limiting path;

(d)  disconnecting said current limiting path during said appliance duty-cycle.

Claim 7.  the method defined in claim 6, wherein said closing said duty-cycle switch includes the step of delaying a predetermined time after said initial energization to permit said current limiting path to absorb transients.

Claim 8.  The method in claim 6, wherein said disconnecting includes the step of delaying a sufficient time after said closing of said duty-cycle switch to permit substantial shunt current to flow.

FIG.1

Fig.2

Fig.3

2/6

0165351

0165351

_Fig. 4_

_Fig. 5_

4/6

0165351

Fig.6

Fig.7

0165351

5/6

Fig. 8

Fig. 9

Fig. 10

European Patent Office

**EUROPEAN SEARCH REPORT**

0165351

Application Number

EP 84 30 5041

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-3 842 233 (J.T. LAMB)<br><br>* Column 5, line 1 - column 6, line 5; figures *<br><br>--- | 1-4,7,8 | H 02 H 9/00<br>H 05 B 6/66 |
| A | FR-A-1 278 191 (G. LOCTIN)<br>* Figure *<br><br>--- | 1,5 | |
| A | US-A-2 838 646 (S.B. WELCH)<br>* Column 2, lines 21-69; figures * <br><br>--- | 1,5 | |
| A | DE-A-2 941 339 (LICENTIA PATENT-VERWALTUNGS-GmbH)<br><br>----- | 1 | |

| | TECHNICAL FIELDS SEARCHED (Int. Cl.4) |
|---|---|
| | G 04 C<br>G 04 F<br>H 05 B<br>H 02 H<br>H 01 H<br>G 05 D |

The present search report has been drawn up for all claims

| Place of search | Date of completion of the search | Examiner |
|---|---|---|
| THE HAGUE | 26-08-1985 | EXELMANS U.G.J.R. |